Europäisches Patentamt

European Patent Office

Office européen des brevets

(19)

(11) Numéro de publication : **0 384 797 B1**

(12)

# FASCICULE DE BREVET EUROPEEN

(45) Date de publication du fascicule du brevet :
**13.05.92 Bulletin 92/20**

(51) Int. Cl.⁵ : **G01G 19/02,** G01G 19/415,
G07C 5/08

(21) Numéro de dépôt : **90400274.8**

(22) Date de dépôt : **02.02.90**

---

(54) **Pont-bascule en libre service.**

---

(30) Priorité : **03.02.89 FR 8901400**

(43) Date de publication de la demande :
**29.08.90 Bulletin 90/35**

(45) Mention de la délivrance du brevet :
**13.05.92 Bulletin 92/20**

(84) Etats contractants désignés :
**BE ES GB GR IT LU**

(56) Documents cités :
**EP-A- 0 298 343
FR-A- 2 214 119
GB-A- 2 158 598
US-A- 3 112 019
US-A- 4 605 081
PATENT ABSTRACTS OF JAPAN, vol. 12, no.
133 (P-693)[2980], 22 avril 1988; & JP-A-62 255
828 (TOSHIBA SOGO KENYUSHO K.K.)07-
11-1987**

(56) Documents cités :
**PATENT ABSTRACTS OF JAPAN, vol. 10, no.
152 (P-462)[2208], 3 juin 1986; & JP-A-61 4929
(KIYATAPIRAA MITSUBISHI K.K.)10-01-1986
POWER AND WORKS ENGINEERING, vol. 58,
no. 686, août 1963, pages 32,33; "Electrical
weighing equipment"**

(73) Titulaire : **YERNAUX PESAGE
Zone Industrielle de Beauregard Boîte Postale
552
F-19107 Brive Cédex (FR)**

(72) Inventeur : **Roborel De Climens, Jacques,
Yernaux Pesage
Zone Industrielle de Beauregard, Boîte
Postale 552
F-19107 Brive Cedex (FR)**

(74) Mandataire : **Fontanié, Etienne
FIVES-CAIL BABCOCK 38, rue de la
République
F-93100 Montreuil (FR)**

## Description

La présente invention concerne les ponts-bascules en libre service comportant, dans une borne ou un local situé près du tablier de pont, un appareil qui indique le poids du véhicule pesé et le prix à payer, un monnayeur permettant d'acquitter le prix indiqué et un distributeur qui délivre, après paiement, un ticket sur lequel est porté le poids du véhicule et d'autres informations telles que la date, le lieu où est situé le pont-bascule, le prix payé, etc ...

Le but de la présente invention est d'apporter aux ponts-bascules en libre service des perfectionnements permettant d'éviter les fraudes.

Conformément à la présente invention, le pont-bascule est équipé d'une caméra vidéo permettant une prise de vue du véhicule sur le tablier du pont, d'une imprimante vidéo reliée à la caméra et éditant une fiche portant l'image du véhicule et du tablier du pont et de moyens pour imprimer sur cette fiche le poids ainsi que la date et l'heure de la pesée. L'image portée sur la fiche doit permettre d'identifier le véhicule (type de remorque, numéro d'immatriculations...) et de vérifier que sa position sur le pont est correcte. En particulier, s'il s'agit d'un véhicule avec remorque ou semi-remorque, l'arrière et un côté du véhicule devront être visibles sur l'image.

L'invention est applicable à tous les types de ponts-bascules, électroniques ou mécaniques, dont la chaîne de mesure fournit un signal numérique. Ce signal sera transformé en signal vidéo par une interface et transmis à l'imprimante qui marquera sur la fiche délivrée par l'imprimante les informations relatives au poids du véhicule, la date, etc ...

D'autres caractéristiques de l'invention apparaitront à la lecture de la description qui suit et se réfère aux dessins l'accompagnant qui montrent, à titre d'exemple non limitatif une forme de réalisation de l'invention et sur lesquels.

La figure 1 est une vue en perspective d'une installation de pont-bascule conforme à l'invention; et

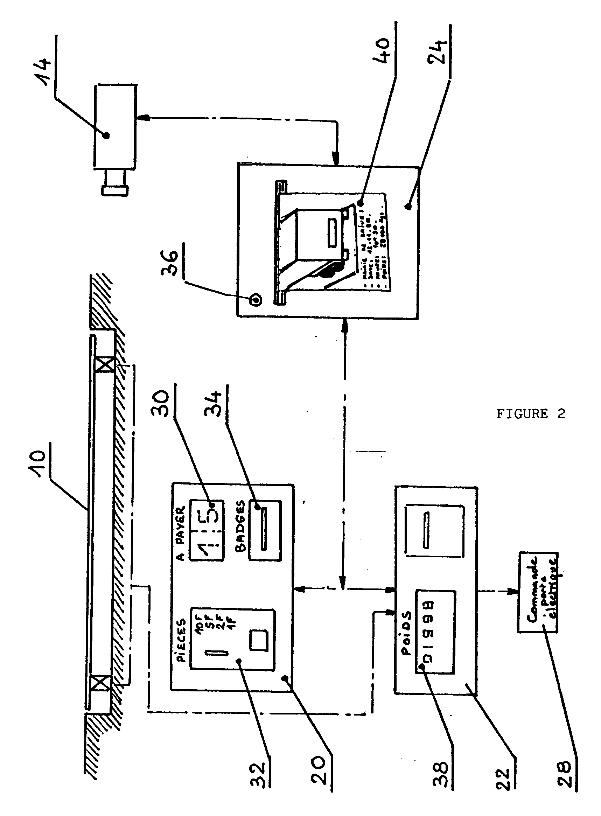

La figure 2 est un schéma montrant les liaisons fonctionnelles entre les différents éléments de l'installation.

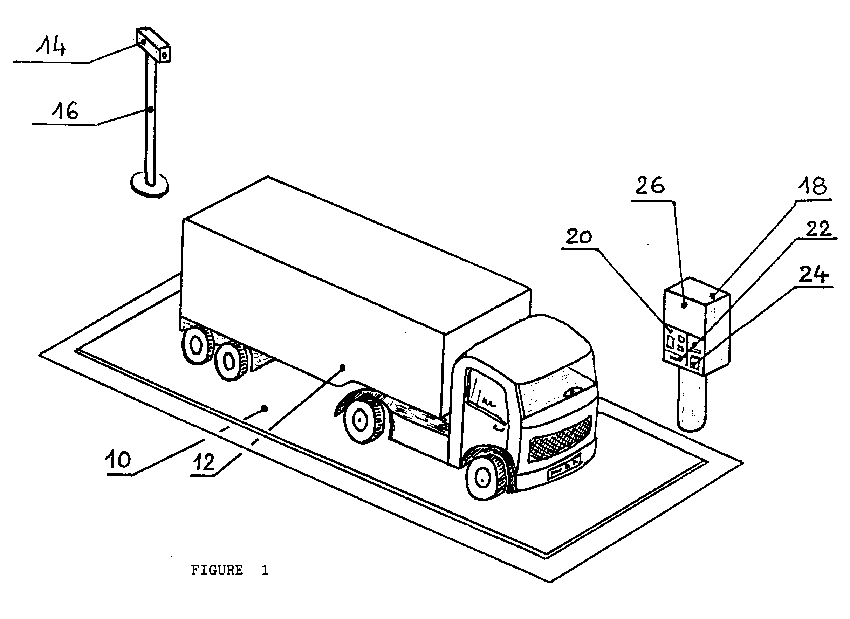

Sur la figure 1, le numéro de référence 10 désigne le tablier du pont-bascule sur lequel est placé un véhicule 12, 14 désigne une caméra vidéo placée au sommet d'un mât 16, et 18 est une borne dans laquelle sont logés un premier module 20 comprenant un monnayeur, un lecteur de badge et un afficheur, un second module 22 comprenant une chaîne de pesage avec affichage du poids et une imprimante vidéo 24.

La borne est munie d'une porte 26, normalement fermée et s'ouvrant automatiquement dès qu'il y a présence d'un véhicule sur le tablier du pont (seuils réglables); on réduit ainsi les possibilités d'actes de vandalisme.

En variante, le module 20, d'une part, et le module 22 et l'imprimante 24, d'autre part, pourraient être placés dans deux logements séparés et fermés par des portes commandées séparément, la porte du logement du module 20 s'ouvrant dès qu'un véhicule est placé sur le pont et la porte de l'autre logement ne s'ouvrant qu'après paiement de la somme affichée sur le module 20.

Le principe de fonctionnement du pont-bascule est le suivant :

Lorsque le véhicule est placé sur le tablier 10 du pont, un signal est envoyé, à partir du module 22, au moteur 28 commandant l'ouverture de la porte 26 de la borne. L'usager peut alors lire le mode d'emploi gravé sur une plaque placée dans la borne :

   – lire sur l'afficheur 30 la somme à payer pour le pesage.

   – introduire la somme demandée dans le monnayeur 32

      ou le badge dans le lecteur de badge 34.

Après paiement, un signal est envoyé par le module 20 au module 22. Le poids du véhicule s'affiche alors en 38 sur le module 22. Simultanément, un signal est envoyé à l'ensemble caméra - imprimante qui devient opérationnel. En appuyant sur le bouton 36, l'usager déclenche la prise de vue et l'impression de l'image du véhicule sur une fiche 40 qui est délivrée à l'usager. Cette fiche porte également le poids du véhicule, qui a été imprimé à partir d'informations fournies à l'imprimante par la chaîne de pesage du module 22, la date, l'heure et les références du pont-bascule : lieu, raison sociale de la société ou de l'organisme exploitant, etc ...; à cette fin, le module 22 comprend une interface qui transforme les signaux de la chaîne de pesage en signaux vidéo qui sont envoyés à l'imprimante.

Les usagers utilisant fréquemment le pont-bascule pourront disposer d'un badge qui leur évitera d'avoir à payer la somme due à chaque pesage. Le lecteur de badge 34 est associé à un micro-processeur qui vérifie le code du badge et porte la somme due au débit du compte du client correspondant. Le total des sommes dues est facturé périodiquement, par exemple tous les mois, à l'usager.

Dans le cas où le module 20, d'une part, et le module 22 et l'imprimante 24, d'autre part, sont placés dans des logements séparés, le paiement du prix affiché ou l'introduction du badge déclenche l'ouverture de la porte du logement du module 22 et de l'imprimante, puis l'affichage du poids et la mise en route de la caméra et de l'imprimante.

La caméra 14 doit être positionnée de telle sorte qu'elle puisse donner une image de tout le tablier 10 du pont et de l'arrière et d'un côté du véhicule.

## Revendications

1. Pont-bascule en libre-service comportant un appareil qui indique le poids du véhicule (12) pesé et le prix à payer, un monnayeur (20) permettant d'acquitter le prix indiqué et un distributeur qui délivre, après paiement, une fiche (40) sur laquelle est porté le poids du véhicule (12), caractérisé en ce qu'il est équipé d'une caméra vidéo (14) permettant une prise de vue du véhicule (12) sur le tablier (10) du pont-bascule, d'une imprimante (24) reliée à la caméra et éditant une fiche (40) portant l'image du véhicule et du tablier du pont, et de moyens pour imprimer sur ladite fiche le poids du véhicule ainsi que la date et l'heure de la pesée.

2. Pont-bascule selon la revendication 1, caractérisé en ce qu'il comporte des moyens pour transformer les signaux provenant de la chaîne de pesage en signaux vidéo qui sont envoyés à l'imprimante (24) qui imprime le poids du véhicule sur la fiche (40).

3. Pont-bascule selon la revendication 1 ou 2, caractérisé en ce qu'il comporte un premier module (20) comportant un monnayeur (32) et/ou un lecteur de badge (34) et un afficheur (30), un second module (22) comprenant une chaîne de pesage avec affichage du poids, et une imprimante vidéo (24), les deux modules et l'imprimante étant logés dans une borne (18) normalement fermée par une porte (26) dont l'ouverture est commandée par la présence d'un véhicule sur le tablier du pont.

4. Pont-bascule selon la revendication 1 ou 2, caractérisé en ce qu'il comporte un premier module (20) comportant un monnayeur (32) et/ou un lecteur de badge (34) et un afficheur (30), un second module (22) comprenant une chaîne de pesage avec affichage du poids, et une imprimante vidéo (24), et en ce que le premier module est placé dans un premier logement normalement fermé par une porte dont l'ouverture est commandée par la présence d'un véhicule sur le tablier du pont et le second module et l'imprimante sont placés dans un second logement normalement fermé par une porte dont l'ouverture est commandée à partir du premier module par paiement de la somme affichée ou introduction d'un badge dans le lecteur de badge.

5. Pont-bascule selon la revendication 1, 2, 3 ou 4, caractérisé en ce que ladite caméra (14) est placée au sommet d'un mât (16), de façon à pouvoir donner une image de tout le tablier (10) du pont et de l'arrière et d'un côté du véhicule (12) placé sur le tablier.

## Patentansprüche

1. Selbstbedienungsbrückenwaage versehen mit einem Anzeigegerät für das Gewicht des gewogenen Fahrzeugs (12) und den zu zahlenden Preis, einem Münzautomaten (20) zur Einzahlung des angezeigten Preises und einem Ausgabegerät, welches nach der Zahlung eine Karte (40) ausdruckt, auf welcher das Gewicht des Fahrzeuges (12) angegeben ist, dadurch gekennzeichnet, daß sie mit einer Video-Kamera (14) ausgerüstet ist, mit der das sich auf der Brücke (10) der Brückenwaage befindliche Fahrzeug (12) gefilmt werden kann, und mit einem Drucker (24), der mit der Kamera verbunden ist und eine Karte (40) ausdruckt, auf der das Fahrzeug und die Brücke der Waage abgebildet sind, sowie mit Mitteln zum Drucken des Fahrzeuggewichts sowie des Datums und der Wiegeuhrzeit auf besagte Karte.

2. Brückenwaage gemäß Anspruch 1, dadurch gekennzeichnet, daß sie mit Mitteln zur Umformung der von der Wiegekette abgegebenen Signale in Video-Signale ausgerüstet ist, welche dem Drucker (24) zugeführt werden, der das Fahrzeuggewicht auf die Karte (40) druckt.

3. Brückenwaage gemäß Anspruch 1 oder 2, dadurch gekennzeichnet, daß sie ein erstes aus einem Münzautomaten (32) und/oder einem Badge-Leser (34) und einer Anzeige (30) bestehendes Modul (20), ein zweites aus einer Wiegekette mit Gewichtsanzeige bestehendes Modul (22) und einen Video-Drucker (24) umfaßt, wobei die beiden Module und der Drucker in einer Säule (18) untergebracht sind, die normalerweise durch eine Türe (26) geschlossen ist, deren Öffnen durch die Anwesenheit eines Fahrzeugs auf der Brücke der Waage eingeleitet wird.

4. Brückenwaage gemäß Anspruch 1 oder 2, dadurch gekennzeichnet, daß sie ein erstes aus einem Münzautomaten (32) und/oder einem Badge-Leser (34) und einer Anzeige (30) bestehendes Modul (20), ein zweites aus einer Wiegekette mit Gewichtsanzeige bestehendes Modul (22) und einen Video-Drucker (24) umfaßt, wobei das erste Modul in einem ersten Gehäuse untergebracht ist, das normalerweise durch eine Türe geschlossen ist, deren Öffnen durch die Anwesenheit eines Fahrzeugs auf der Brücke der Waage eingeleitet wird, und das zweite Modul und der Drucker in einem zweiten Gehäuse, das normalerweise durch eine Türe geschlossen ist, deren Öffnen vom ersten Modul durch die Zahlung der angezeigten Summe oder Einführen eines Badges in den Badge-Leser eingeleitet wird.

5. Brückenwaage gemäß Anspruch 1, 2, 3 oder 4, dadurch gekennzeichnet, daß besagte Kamera (14) oben auf einem Pfosten (16) angebracht ist, damit sie ein Bild der gesamten Brücke (10) der Waage und der Rückseite sowie einer der Längsseiten des auf der Brücke befindlichen Fahrzeugs (12) machen kann.

## Claims

1. Self-service weighbridge comprising an apparatus which indicates the weight of the vehicle (12) weighed and the price to be paid, a slot paying machine (20) enabling to pay the indicated price and a slot machine which issues, after payment, a slip (40) showing the weight of the vehicle (12), characterized in that it is equipped with a video camera (14) permitting to take a view of the vehicle (12) on the weighbridge platform (10), a printer (24) connected to the camera, which issues a slip (40)showing the picture of the vehicle and of the weighbridge platform, and means for printing the weight of the vehicle and the date and time of the weighing operation on the said slip.

2. Weighbridge according to claim 1, characterized in that it includes means for transforming the signals coming from the weighing loop into video signals which are sent to printer (24) which prints the weight of the vehicle on slip (40).

3. Weighbridge according to claim 1 or 2, characterized in that it includes a first module (20) comprising a slot paying machine (32) and/or a badge reader (34) and a display unit (30), a second module comprising a weighing loop with weight display , and a video printer (24), both modules and the printer being housed in a pillar normally closed by a door (26) which opens when a vehicle is present on the weighbridge platform.

4. Weighbridge according to claim 1 or 2, characterized in that it includes a first module (20) comprising a slot paying machine (32) and/or a badge reader (34) and a display unit (30), a second module (22) comprising a weighing loop with weight display, and a video printer (24), and in that the first module is placed in a first housing normally closed by a door which opens when a vehicle is present on the weighbridge platform and the second module and the printer are placed in a second housing normally closed by a door the opening of which is controlled from the first module by payment of the sum displayed or insertion of a badge in the badge reader.

5. Weighbridge according to claim 1, 2, 3 or 4, characterized in that the said camera (14) is placed at the top of a pole (16) so that it may give a picture of the whole weighbridge platform (10) and of the back and one side of vehicle (12) placed on the platform.

FIGURE 1

FIGURE 2